# EUROPÄISCHE PATENTSCHRIFT

(11) **EP 1 007 827 B1**
(45) Veröffentlichungstag und Bekanntmachung des Hinweises auf die Patenterteilung: **16.04.2003**
(21) Anmeldenummer: 99931112.9
(22) Anmeldetag: 19.06.1999
(51) Int. Cl.: F01N 3/20, B01D 53/94

(54) **ABGASREINIGUNGSSYSTEM ZUM ENTSTICKEN VON ABGASEN VON VERBRENNUNGSAGGREGATEN**
EXHAUST EMISSION CONTROL SYSTEM FOR DENOXING EXHAUST GASES FROM COMBUSTION UNITS
SYSTEME DE PURIFICATION DE GAZ D'ECHAPPEMENT POUR ELIMINER L'AZOTE CONTENU DANS DES GAZ D'ECHAPPEMENT DE GROUPES A COMBUSTION

(30) Priorität: 22.06.1998 DE 19827678
(43) Veröffentlichungstag der Anmeldung: 14.06.2000
(73) Patentinhaber: HJS Fahrzeugtechnik GmbH & Co., 58706 Menden (DE)
(72) Erfinder: WEISWEILER, Werner, 75196 Remchingen-Singen (DE); HÜTHWOHL, Georg, 59494 Soest (DE); MAURER, Bernd, 58802 Balve (DE)
(74) Vertreter: Haverkamp, Jens
(86) Internationale Anmeldenummer: EP9904268
(87) Internationale Veröffentlichungsnummer: WO99067512

(56) Entgegenhaltungen:
- DE-A- 4 200 514
- DE-C- 19 720 209
- GB-A- 2 279 699
- US-A- 5 605 042
- PATENT ABSTRACTS OF JAPAN vol. 1996, no. 07, 31. Juli 1996 (1996-07-31) & JP 08 057258 A (BABCOCK HITACHI KK), 5. März 1996 (1996-03-05)

## Beschreibung

Die Erfindung bezieht sich auf das Gebiet der Verminderung von bei Verbrennungsaggregaten entstehenden Primärschadstoffen mittels eines Katalysators. Insbesondere betrifft die Erfindung ein Abgasreinigungssystem zum Entsticken von Abgasen von Verbrennungsaggregaten an einem SCR-Katalysator umfassend einen beheizbaren, druckfesten Konverter, in dem ein thermolytisch NH₃-abspaltender Stoff oder ein entsprechendes Stoffgemisch enthalten ist, einen NH₃-Speicher zum Zwischenspeichern von aus dem Stoff oder dem Stoffgemisch abgespaltenem NH₃, einen den Konverter mit dem Abgas verbindenden Zuleitungsstrang zum Zuführen des NH₃ in den Abgasstrom und eine in den Zuleitungsstrang integrierten Doslervorrichtung zum Dosieren der in den Abgasstrom einzuleitenden NH₃-Menge. Ferner betrifft die Erfindung ein Verfahren zum Befüllen eines Konverters eines solchen Abgasreinigungssystems mit einem NH₃-Menge abspaltenden Stoff, nämlich Ammoniumcarbamat.

Ein derartiges Abgasreinigungssystem ist aus der DE 197 20 209 C1 der Anmelderin bekannt. Mit dem in diesem Dokument beschriebenen Abgasreinigungssystem ist eine NH₃-Zuführung In den an ein Verbrennungsaggregat angeschlossenen Abgasstrang möglich. Zu diesem Zweck verwendet das Abgasreinigungssystem einen beheizbaren, druckfesten Konverter, in dem ein NH₃-abspaltender Stoff, beispielsweise Ammoniumcarbamat, enthalten ist. Durch Erwärmen des Konverters zersetzt sich das Ammoniumcarbamat in die beiden Gase NH₃ und CO₂. Dieses Gasgemisch wird in einen Zwischenspeicher eingeleitet, welcher Zwischenspeicher auch der Konverter selbst sein kann. Der Konverter ist über einen Zuleitungsstrang mit dem Abgasstrang verbunden, über den das erzeugte NH₃ dem Abgasstrom beigemengt werden kann. Der Zuleitungsstrang mündet in den Abgasstrang unmittelbar vor einem SCR-Katalysator (Selective Catalytic Reduction-Katalysator). Im Zuleitungsstrang ist ein als Dosiervorrichtung vorgesehenes Taktventil angeordnet, mit dem die in den Abgasstrom einzuleitende NH₃-Menge dosierbar ist. Zu diesem Zweck wird das Taktventil in Abhängigkeit von erfaßten Motorkenndaten, die Rückschlüsse auf die in dem Abgasstrom enthaltende NOₓ-Menge erlauben gesteuert.

Das Zwischenspeichern einer geringen NH₃-Menge ist als ungefährlich einzustufen, und durch die vorgesehene Nachproduktion ist sichergestellt, in den Abgasstrom immer die benötigte NH₃-Menge eindüsen zu können, damit eine möglichst vollständige Entstickung an dem nachgeschalteten SCR-Katalysator erzielt werden kann. Die Verwendung eines NH₃abspaltenden Stoffes, wie etwa Ammoniumcarbamat, hat gegenüber einer Handhabung des NH₃-Gases den Vorteil einer problemlosen Handhabung bei üblichen Umgebungstemperatungen. Gegenüber einem Einsatz von Harnstoff hat eine Verwendung von Ammoniumcarbamat den Vorteil, daß eine NH₃-Abspaltung in der benötigten Menge bereits bei etwa 60°C beginnt und bei 80 - 100°C weitestgehend abgeschlossen ist, so daß der Konverter mit dem einem Verbrennungsmotor zugeordneten Kühlsystem beheizbar ist.

In der Praxis hat sich das in dem vorbekannten Abgasreinigungssystem verwirklichte Entstickungskonzept bewährt. Dennoch gilt es, das bekannte Abgasreinigungssystem hinsichtlich einiger Punkte für sich alleine bzw. auch in ihrer Summe zu verbessern, welche Verbesserungen sich insbesondere auf einen Einsatz des Abgasreinigungssystems in einem Kraftfahrzeug, beispielsweise mit einem Dieselmotor, beziehen:

Beim Starten des Motors eines Kraftfahrzeuges befindet sich der Konverter im kalten Zustand; erst mit zunehmender Erwärmung des Konverters durch zunehmend wärmer werdendes Kühlwasser des Verbrennungsmotors heizt sich der Konverter auf seine Betriebstemperatur zur Bereitstellung der benötigen NH₃-Menge sowie des benötigten Druckes auf. Es dauert daher eine gewisse Zeit, bis der Konverter zur Bereitstellung des benötigen NH₃-Menge betriebsbereit ist. Es ist jedoch gewünscht, daß auch beim Starten eines Motors bereits ausreichend NH₃ zum Eindüsen in den Abgasstrom zur Verfügung steht. Es ist daher eine Aufgabe einer weiteren Erfindung, das gattungsgemäße Abgasreinigungssystem weiter zu entwickeln, damit auch bei einem Kaltstart eines Verbrennungsmotors die gewünschte NH₃-Menge zur Verfügung steht.

Der Konverter des gattungsgemäßen Abgasreinigungssystems ist über einen Zuleitungsstrang mit dem Abgasstrang verbunden. Üblicherweise befindet sich der Konverter in einigem Abstand zu dem Abgasstrang. Es hat sich gezeigt, daß auf dieser Strecke sich bei einer Verwendung von Ammoniumcarbamat als NH₃-abspaltenden Stoff das NH₃-CO₂-Gasgemisch in dem Zuleitungsstrang, insbesondere in den darin angeordneten Ventilen wieder zu Ammoniumcarbamat in seiner festen Form zurückbilden kann. Im ungünstigen Fall kann dies zu einem Verstopfen des Zuleitungsstranges führen. Es ist daher eine Aufgabe einer weiteren Erfindung, ein gattungsgemäßes Abgasreinigungssystem bereitzustellen, in dessen Zuleitungsstrang ein Auskristallisieren des NH₃-abspaltenden Stoffes aus der in dem Zuleitungsstrang geführten Gasphase verhindert ist.

Der Erfindung liegt daher die Aufgabe zugrunde, den zum vorbekannten Stand der Technik aufgezeigten Nachteilen zu begegnen.

Diese Aufgabe wird erfindungsgemäß durch die Ansprüche 1, 3 und 7 gelöst.

Um das vorbekannte Abgasreinigungssystem kaltstartfähig zu machen, ist vorgesehen, daß dem Zuleitungsstrang ein beheizbarer Kaltstartspeicher zugeordnet ist, in dem eine kleine Menge des NH₃-abspaltenden Stoffes, etwa Ammoniumcarbamat enthalten ist. Der Kaltstartspeicher kann mit einer Widerstandsheizung oder auch mit Abgas auf eine relativ hohe Temperatur aufgeheizt werden, so daß in sehr kurzer Zeit die in dem Kaltstartspeicher befindliche Ammoniumcarbamatmenge vergast Ist. Da im kalten Zustand des SCR-Katalysators ohnehin nur eine unvollständige Entstickung durchgeführt werden kann, braucht beim Startvorgang auch nur eine geringe NH₃-Menge bereitgestellt zu werden. Entsprechend klein dimensioniert kann der Kaltstartspeicher ausgelegt sein. Der Kaltstartspeicher ist zu diesem Zweck mit seinem offenen Ende in dem Zuleitungsstrang in Strömungsrichtung vor dem Taktventil mündend angeordnet. Der Kaltstartspeicher kann mit Aktivkohle oder mit einem anderen oberflächenreichen Material gefüllt sein. Der Kaltstartspeicher ist bezüglich des Zuleitungsstranges in einer Position vorgesehen, die bezüglich der Betriebstemperatur des Zuleitungsstranges relativ kühl ist. Beim Betrieb des Abgasreinigungssystems, bei dem aus dem Konverter bei einer Verwendung von Ammoniumcarbamat NH₃ und CO₂ den Zuleitungsstrang durchströmen, bildet sich dieses bei seinem Eintreten in den Kaltstartspeicher zu Ammoniumcarbamat zurück. Folglich ist der Kaltstartspeicher gefüllt, wenn der Motor erneut kalt gestartet wird.

Zur Verhinderung, daß sich aus dem im Konverter bereitgestellten Gasgemisch der NH₃-abspaltende Stoff in dem Zuleitungsstrang zum Ausgangsstoff zurückbildet, kann vorgesehen sein, daß in den Zuleitungsstrang mit einer Lufteinspeisungseinrichtung Druckluft eingeblasen wird. Dadurch erfolgt eine gewisse Verdünnung des bereitgestellten Gasgemisches bzw. der bereitgestellten NH₃-Menge, welche Verdünnung jedoch regulierbar ist. Bei einer Verwendung von Ammoniumcarbamat als NH₃abspaltenden Stoff kann eine Luftverdünnung in dem Zuleitungsstrang von bis zu etwa 100 % erfolgen, ohne daß Einbußen hinsichtlich der Funktionstüchtigkeit des Abgasreinigungssystems hingenommen werden müssen. Die Lufteinspeisungseinrichtung umfaßt eine Druckluftquelle, die beispielsweise der Kompressor eines Lastkraftwagens oder ein Turbolader sein kann, sowie mit Ventilen versehene Luftleitungen, die in den Zuleitungsstrang münden. Dabei kann vorgesehen sein, daß die Lufteinspeisungseinrichtung zwei Luftleitungen aufweist, wobei eine erste in Strömungsrichtung hinter dem Taktventil und eine zweite in Strömungsrichtung vor dem Taktventil und somit unmittelbar im Bereich des Ausganges des Konverters in den Zuleitungsstrang münden. Die zweite Luftleitung ist durch ein Rückschlagventil gegenüber einem Eindringen des Nutzgases bzw. Nutzgasgemisches gesichert. In der ersten Luftleitung ist ein Ventil zum Regulieren der einzudüsenden Luftmenge angeordnet. Die erste Luftleitung mündet zweckmäßigerweise in eine den Taktventilen nachgeschaltete Mischkammer, in der eine ausreichende Verwirbelung und somit einhergehende Vermischung mit dem NH₃-Gasgemisch erfolgt. In einem solchen Fall ist vorgesehen, das Taktventil sowie die weiteren in dem Zuleitungsstrang angeordneten Ventile, etwa ein Magnetventil am Ausgang des Konverters und ein Druckmindererventil sowie den Strang selbst zu beheizen, um eine Rückbildung des Nutzgasgemisches in seinen Ausgangsstoff zu verhindern. Diese genannten Komponenten können in einer gegenständlichen Einheit angeordnet sein, so daß der Heizaufwand auf ein Minimum reduziert ist, wobei in einem zweckmäßigen Ausführungsbeispiel vorgesehen ist, diesen Gegenstand sowohl mit einer Widerstandsheizung als auch mit Durchlässen zu versehen, so daß dieser Gegenstand an den Kühlwasserkreislauf anschließbar ist und von diesem erwärmt werden kann. Die Widerstandsheizung dient lediglich zum Erwärmen dieses Modules beim Starten des Motors. Die zweite Luftleitung dient zum "Spülen" des Zuleitungsstranges vor einem Motorstart oder auch zum "Spülen" zwischen einzelnen Dosierphasen, um evtl. vorhandene NH₃-abspaltende Stoffreste zu entfernen.

Daneben besteht auch die Möglichkeit, den gesamten Zuleitungsstrang zu beheizen, um eine Rückbildung des NH₃-Gasgemisches in seinen Ausgangsstoff zu verhindern.

Zur Erneuerung des NH₃-abspaltenden Stoffes oder Stoffgemisches in dem Konverter ist vorgesehen, diesen befüllbar auszugestalten. Ein solcher Konverter ist auf unterschiedliche Arten befüllbar, etwa mittels einer Gasbefüllung oder mittels einer Feststoffbefüllung. Denkbar ist auch eine Befüllung des Konverters in flüssiger oder gelartiger Form, in welchen Lösungsmitteln der NH₃-abspaltende Stoff enthalten ist. Das Abgasreinigungssystem ist dann auch zur Handhabung der Lösungsmittel ausgelegt.

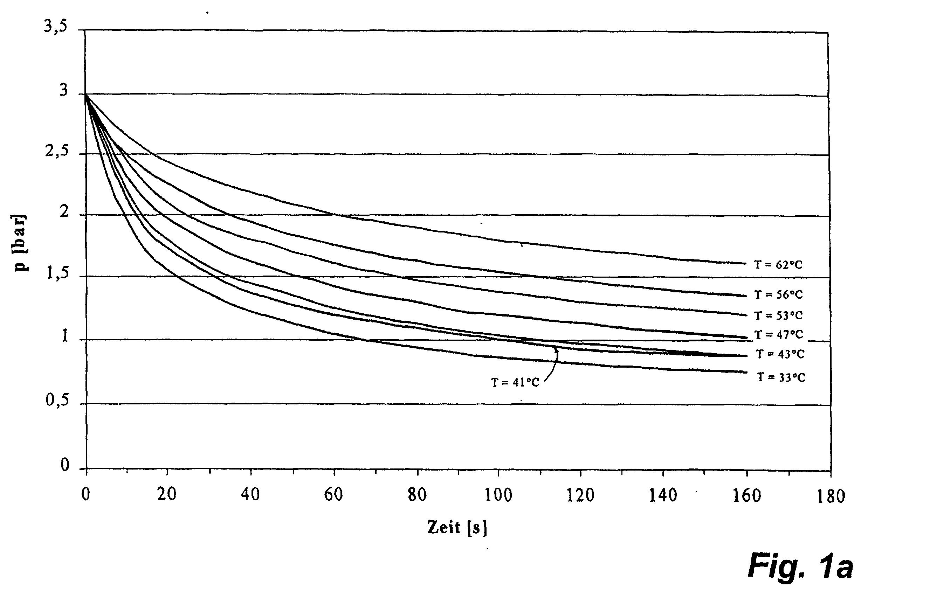

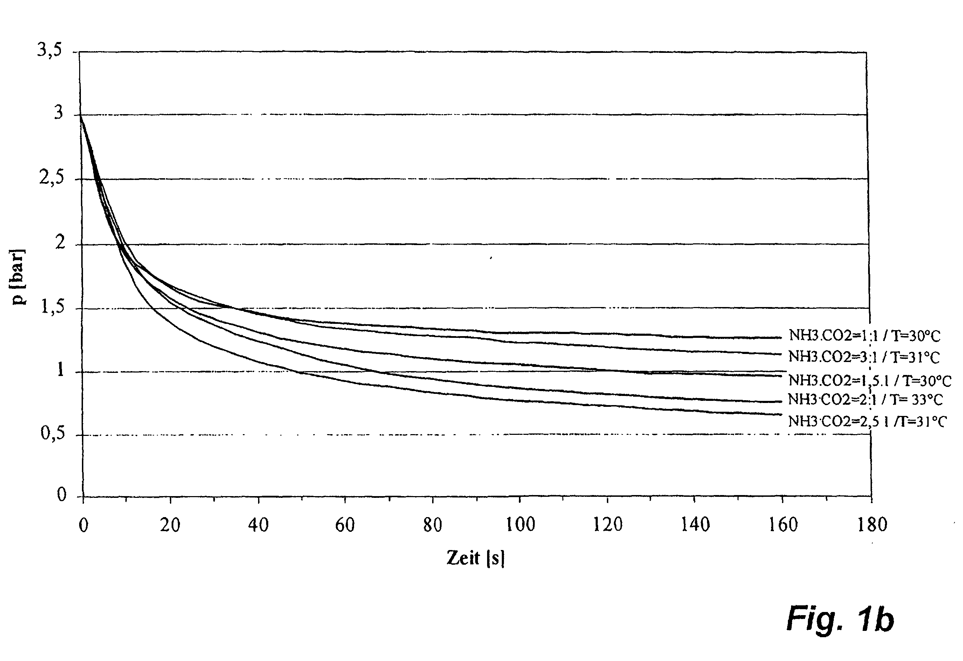

Bei einer Gasbefüllung des Konverters werden die vorhandenen Einheiten, Konverter und Wärme- bzw. Kühlwasserschlange, bezogen auf das Abgasreinigungssystem mit genau umgekehrter Funktionalität eingesetzt. Zusätzliche Aggregate werden daher nicht benötigt. Der Konverter weist zu diesem Zweck zwei Befüllungsleitungen auf, wobei eine zum Zuführen von NH₃ und eine zweite zum Zuführen von CO₂ vorgesehen sind. Die befüllungsseitigen Enden der Befüllungsleitungen sind so ausgebildet, daß diese an einen das jeweilige Gas enthaltenden Tank anschließbar sind. Beispielsweise können hier entsprechend angepaßte Anschlüsse, wie sie aus Gasbetankungsanlagen für Kraftfahrzeuge bekannt sind, eingesetzt werden. Die beim Betrieb der Abgasreinigungsvorrichtung vorgesehene Wärmeschlange dient nunmehr zum Kühlen des Konverters, so daß sich die einströmenden Gase in dem Konverter zu Ammonlumcarbamat zurückbilden können. Eine Kühlung ist auch deswegen erwünscht, da die Reaktion zwischen den Gasen NH₃ und CO₂ exotherm verläuft, so daß zur Beschleunigung der Ammoniumcarbamatbildung diese Reaktionswärme zusätzlich abgeführt werden muß. Die Kühlungwirkung und umgekehrt auch die Erwärmung des Konverters kann durch einen Einsatz von Rippenrohren gesteigert werden. Das erwünschte NH₃ : CO₂-Verhältnis in dem Konverter zur Bildung des Ammoniumcarbmates beträgt zweckmäßigerweise etwa 2,5 : 1, wobei dieses Verhältnis über den jeweiligen Druck der vorgelegten Gase eingestellt werden kann. Damit eine Beschickung des Konverters durch eine Gasbefüllung in einer annehmbaren Zeit erfolgen kann, ist es zweckmäßig, daß der Konverter soweit gekühlt wird, daß dieser eine maximale Temperatur von 30 - 33°C aufweist. Bei höheren Temperaturen läuft die gewünschte Reaktion entsprechend langsamer ab. Zur Verdeutlichung dieser Zusammenhänge sei auf **Figur 1a** und **Figur 1b** verwiesen, in denen der Reaktionsverlauf bei einer Vermengung von NH₃ und CO₂ bei einer Temperaturvariation bzw. bei einer Variierung des NH₃ : CO₂-Verhältnisses im diskontinuierlichen Betrieb gezeigt ist.

Für eine Betankungszeit kann aus den durchgeführten Untersuchungen geschlossen werden, daß bei einer Temperatur von 33°C, einem NH₃ : CO₂-Verhältnis von 2 : 1 und einer Anfangsreaktionsgeschwindigkeit dp/dt = 0,15 bar/s das zur Bildung von einem Mol Ammoniumcarbamat (78 Gramm) etwa 30 Sekunden Reaktionszeit benötigt werden. Durch Extrapolation dieses Ergebnisses ergibt sich eine Betankungszeit für 1 kg Ammoniumcarbamat von etwa 6,5 Minuten. Bei einer Verwendung des Abgasreinigungssystems in einem Lastkraftwagen kann somit der eingesetzte Konverter in der normalen, für das Tanken vorgesehenen Zeit ebenfalls neu befüllt werden.

Zur Vereinfachung einer Konverterkühlung für eine Betankung bei aufgewärmtem Kühlwasser, ist in einer Ausgestaltung vorgesehen, daß das Abgasreinigungssystem zwei als Duplex-System angeschlossene Konverter aufweist. Das Abgasreinigungssystem kann dann so gesteuert werden, daß immer nur ein Konverter von dem warmen Kühlwasser erwärmt wird, so daß der andere Konverter entsprechend kalt ist, um durch eine Gasbefüllung betankt zu werden.

Bei einer Feststoffbefüllung des Konverters mit einem NH₃-abspaltenden Stoff oder Stoffgemisch ist vorgesehen, daß der Konverter einen Anschlußstutzen aufweist, dessen freies Ende an einer Dosiereinrichtung angeschlossen ist. Der Eingang der Dosiereinrichtung, beispielsweise ein Zellenrad, ist an den Ausgang eines Bevorratungsbehältnisses angeschlossen. Das Zellenrad ist eingangsseitig und ausgangsseitig durch jeweils ein Ventil absperrbar. Dabei kann vorgesehen sein, daß das Bevorratungsbehältnis fest dem Abgasreinigungssystem zugeordnet ist und eine verschließbare Einfüllöffnung aufweist. Es kann jedoch auch vorgesehen sein, daß das Bevorratungsbehältnis selbst ein Wechselcontainer oder ein Einwegcontainer ist, in dem beispielsweise Ammoniumcarbamat als NH₃-abspaltender Stoff in Form von ggf. beschichteten Pellets enthalten sind. Ein solches Bevorratungsbehältnis wird an den Eingang der Dosiereinrichtung angeschlossen, anschließend geöffnet, so daß die Pellets dem Zellenrad und anschließend dem Konverter zugeführt werden können. Eine derartige Befüllung kann auch als Befüllung des Konverters ausgestaltet sein, wobei über das Zellenrad der gesamte Inhalt des Bevorratungsbehältnisses in den Konverter eingebracht wird. Es kann jedoch auch vorgesehen sein, daß der Konverter kontinuierlich mit beispielsweise Ammoniumcarbamatpellets beschickt wird, so daß die in dem Konverter befindliche Ammoniumcarbamatmenge konstant gehalten wird. Die in dem Konverter enthaltene Ammoniumcarbamatmenge braucht dann nur relativ gering zu sein, da kontinuierlich oder in Intervallen über das Zellenrad neues unverbrauchtes Ammoniumcarbamat in den Konverter einfüllbar ist. Durch die dann geringere Menge von Ammoniumcarbamat in dem erwärmten Konverter reduziert sich auch das von dem Konverter ausgehende Gefahrenpotential im Falle eines Unfalles.

Die Erfindung beschränkt sich nicht auf die Bereitstellung eines Abgasreinigungssystems, welches ausschließlich einen Einsatz von lediglich thermolytisch NH₃-abspaltenden Stoffen oder Stoffgemischen verwendet wird, sondern umfaßt ebenfalls solche Systeme, bei denen Stoffe zum Einsatz kommen, die zur NH₃-Abgabe zweistufig zersetzt werden, wobei in einem ersten Schritt eine thermolytische und in einem zweiten Schritt etwa eine hydrolytische Zersetzung durchgeführt wird.

Weitere Vorteile und Weiterbildungen ergeben sich aus der nachfolgenden Beschreibung bevorzugter Ausführungsbeispiele unter Bezugnahme auf die Figuren. Es zeigen:
- **Fig. 2**: in einer schematisierten Darstellung ein Abgasreinigungssystem zum Entsticken von Abgasen eines Verbrennungsmotors an einem SCR-Katalysator,
- **Fig. 3**: in einer Prinzipdarstellung eine als Duplex-System ausgebildete Konverteranordnung und
- **Fig. 4**: einen weiteren Konverter für ein Abgasreinigungssystem der Figur 1 mit einer Feststoffbefüllungseinrichtung.

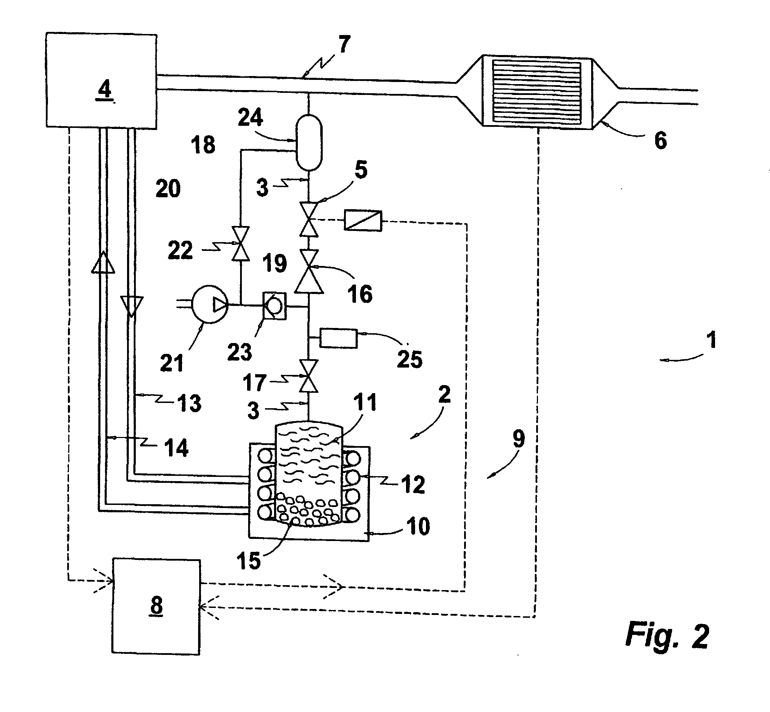

Das in Figur 2 schematisch dargestellte Abgasreinigungssystem 1 umfaßt einen Konverter 2, einen Zuleitungsstrang 3 zum Zuführen von NH₃ in den Abgasstrom eines Dieselmotors 4 und ein als Doslervorrichtung vorgesehenes Taktventil 5 sowie einen SCR-Katalysator 6. Die Zuführleitung 3 mündet in den Abgasstrang 7 des Dieselmotors 4 vor der Eingangsseite des Katalysators 6.

Zur Steuerung des Taktventiles 5 ist eine speicherprogrammierte Steuereinheit 8 vorgesehen, die mit den Signalen von Motorbetriebskenndaten aufnehmenden Sensoren sowie mit den Signalen eines die Katalysatortemperatur aufnehmenden Sensors beaufschlagt ist. Ausgangsseitig ist die Steuereinheit über eine Steuerleitung 9 mit dem Taktventil 5 verbunden, so daß das Taktventil 5 durch die Steuereinheit 8 zum Dosieren der den Abgasstrom beizumengenden NH₃-Menge gesteuert wird.

Der Konverter 2 besteht aus einer Heizeinheit 10 sowie einem Reaktionsbehälter 11. Die Heizeinheit 10 umfaßt eine Wärmeschlange 12, die über eine Zuleitung 13 und eine Ableitung 14 in den Kühlwasserkreislauf des Dieselmotors 4 eingebunden ist. Dabei ist in der Zuleitung zur Temperaturbegrenzung ein Thermostatventil eingeordnet. Das die Wärmeschlange 12 durchströmende Kühlwasser hat bei einem Betrieb des Dieselmotors 4 in der Regel eine Temperatur zwischen 80 und 100°C, die gegebenenfalls auch bis 110°C ansteigen kann. Zum raschen Erwärmen der Heizeinheit 10 bzw. des darin aufgenommenen Reaktionsbehälters 11 sind die Zuund Ableitungen 13, 14 in den sogenannten kleinen Kühlwasserkreislauf des Dieselmotors 4 eingebunden.

Der Reaktionsbehälter 11 ist ein druckfester Behälter, in dem eine vorbestimmte Menge an Ammoniumcarbamat 15 eingebracht ist. Der Reaktionsbehälter 11 ist druckfest verschlossen.

Durch Aufheizen des Ammoniumcarbamats 15 infolge der Durchströmung der Heizeinheit 10 mit in der Regel 80 - 100°C warmen Kühlwasser zersetzt sich das Ammoniumcarbamat 15 in NH₃ und CO₂, wobei eine nahezu vollständige Zersetzung des Ammoniumcarbamats 15 zur Herstellung des NH₃-enthaltenen Reduktionsgasgemisches erfolgt. Die in dem Reaktionsbehälter 11 erzeugten Gase - NH₃ und CO₂ - verbleiben zunächst in dem Reaktionsbehälter 11, der gleichzeitig als Zwischenspeicher dient.

Bei zunehmender Zersetzung des Ammoniumcarbamats 15 durch Aufrechterhalten der Abspaltungstemperatur im Reaktionsbehälter 11 steigt der Innendruck in diesem bis auf etwa 8 bar bei einer Temperatur von etwa 100°C. In Abhängigkeit von der Innentemperatur des Reduktionsbehälters 11 stellt sich bei Erreichen des genannten Innendruckes ein Gleichgewichtszustand ein, so daß weiteres Ammoniumcarbamat 15 nicht zersetzt wird. Somit bildet der Reaktionsbehälter 11 auch gleichzeitig einen NH₃-Speicher, aus dem das NH₃-haltige Gasgemisch abgezogen werden kann. Die Entnahme einer bestimmten Gasmenge führt gleichzeitig zu einer Reduzierung des Innendruckes in dem Reaktionsbehälter 11, so daß die Zersetzung von weiterem Ammoniumcarbamat 15 unter Abspaltung von NH₃ die Folge ist. Es wird solange weiteres Ammoniumcarbamat 15 zersetzt, bis sich der oben genannte Gleichgewichtszustand wieder eingestellt hat. Durch Ausnutzen des sich einstellenden Gleichgewichtszustandes in dem Reaktionsbehälter 11 ist ein Mittel geschaffen, um die NH₃-Produktion nach Erreichen einer bestimmten NH₃-Menge zu stoppen, ohne daß dieses zusätzliche Steuerungsmechanismen bedürfte. Entsprechend übersteigt die im Konverter 2 befindliche NH₃-Menge ein bestimmtes Maß nicht.

Das abgespaltene NH₃ wird über ein Druckreduzierventil 16 dem Reaktionsbehälter 11 entnommen und über den Zuleitungsstrang 3 dem Taktventil 5 zugeführt.

Am Ausgang des Konverters 2 ist im Zuleitungsstrang 3 dem Druckerreduzierventil 16 vorgeschaltet ein Magnetventil 17 zur Steuerung der Entnahme einer NH₃-Gasgemisch-Menge angeordnet. In den Zuleitungsstrang 3 münden zwei Luftleitungen 18, 19 einer Lufteinspeisungseinrichtung 20, die mit Preßluft durch einen Kompressor 21 beaufschlagt ist. In der Luftleitung 18 ist ein Magnetventil 22 und in der Luftleitung 19 ein Rückschlagventil 23 angeordnet. Die Luftleitung 18 mündet in NH₃-Strömungsrichtung hinter dem Taktventil 5 in eine Mischkammer 24, die Teil des Zuleitungsstranges 3 ist. Die Luftleitung 19 mündet in Strömungsrichtung vor dem Druckreduzierventil 16 in den Zuleitungsstrang 3. Mit Hilfe der Lufteinspeisungseinrichtung 20 kann über die Luftleitung 19 vor einem Starten des Motors 4 der Zuleitungsstrang 3 zu seiner Reinigung durchblasen werden, wobei ebenfalls das Druckreduzierventil 16, das Taktventil 5 und die Mischkammer 24 durchströmt und somit gereinigt werden. Über die Luftleitung 18 erfolgt eine Einspeisung von Druckluft in die Mischkammer 24 des Zuleitungsstranges 3, so daß auf der Strecke zwischen der Mischkammer 24 und dem Abgasstrang 7 durch die eintretende Gasverdünnung weitestgehend verhindert ist, daß sich aus dem NH₃-CO₂-Gasgemisch Ammoniumcarbamat abscheidet.

Zum Verhindern einer Ammoniumcarbamatabscheidung in dem Zuleitungsstrangabschnitt, umfassend das Magnetventil 17, das Druckreduzierventil 16 und das Taktventil 5, ist diesem Abschnitt des Zuleitungsstranges 3 eine in Figur 2 nicht dargestellte Heizeinrlchiung zugeordnet.

An den Zuleitungsstrang 3 ist femer ein Kaltstartspeicher 25 angeschlossen. Der Kaltstartspeicher 25 ist mit Aktivkohle zum Sorbieren von Ammoniumcarbamat befüllt. Das Behältnis des Kaltstartspeichers 25 befindet sich außerhalb der beheizten Abschnitte des Zuleitungsstranges 3. Der Kaltstartspeicher 25 verfügt über eine nicht näher dargestellte eigene Widerstandsheizeinrichtung, mit der der Kaltstartspeicher 25 in kurzer Zeit auf Temperaturen von etwa 150 - 200°C erwärmt werden kann. Diese Heizung wird nur beim Motorstart und nur für eine solche Zeitdauer betätigt, bis der Konverter 2 durch das warm werdende Kühlwasser soweit aufgeheizt ist, daß das in dem Konverter 2 befindliche Ammoniumcarbamat 15 NH₃ abspaltet und ein ausreichender Druck entstanden ist. Nach Verbrauch des ersten NH₃-Gasgemisches beim Starten des Motors 4 durch Aufheizen des Kaltstartspeichers 25 dient dieser beim späteren Betrieb des Abgasreinigungssystems 1 als Kühlfalle, in dem sich aus dem den Zuleitungsstrang 3 durchströmenden NH₃-CO₂-Gasgemisch Ammoniumcarbamat für den nächsten Kaltstart abscheidet.

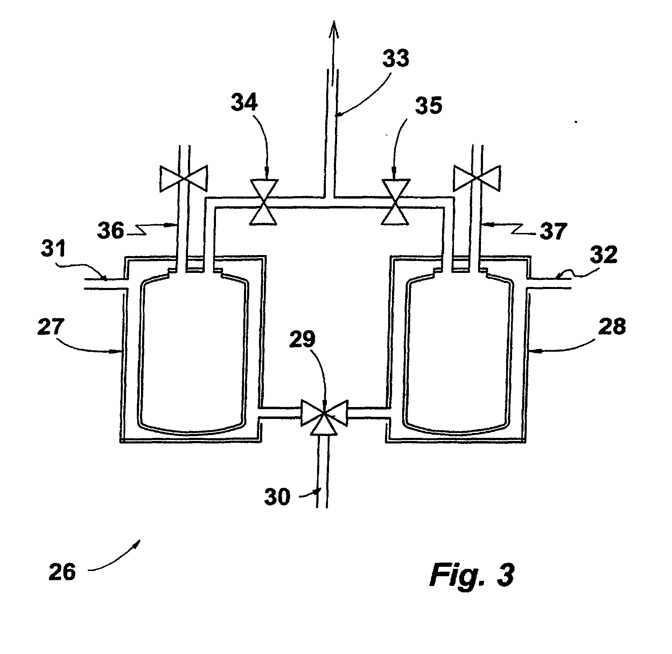

Figur 3 zeigt ein Konvertersystem 26, bestehend aus zwei einzelnen Konvertern 27, 28, die zur Produktion des NH₃-Gasgemisches wechselweise an den Kühlwasserkreislauf eines Verbrennungsmotors anschließbar sind. Beide Konverter 27, 28 sind über ein Drei-Wege-Ventil 29 an eine Kühlwasserzuleitung 30 angeschlossen. Die beiden Kühlwasserableitungen 31, 32 führen das Kühlwasser in den kraftfahrzeugseitigen Kühlwasserkreislauf zurück. Ausgangsseitig sind die beiden Konverter 27, 28 an den in den Abgasstrang mündenden Zuleitungsstrang 33 angeschlossen, wobei vorgesehen ist, daß vor einem Zusammenfluß der beiden Anschlußstutzen in den gemeinsam benutzten Zuleitungsstrang 33 jeder Anschlußstutzen durch ein Magnetventil 34, 35 absperrbar ist.

In jeden Konverter 27, 28 mündet eine zweikanalige Befüllungsleitung 36, 37 zum Befüllen der beiden Konverter 27, 28 mit den beiden Gasen NH₃ bzw. CO₂, damit aus dem sich in den Konvertern 27, 28 bildenden Gasgemisch Ammoniumcarbamat abscheiden kann.

Ein solches Duplex-Konverter-System als Teil eines Abgasreinigungssystems ist insbesondere zweckmäßig, wenn die Betankungszeiten für die Konverter 27, 28 möglichst niedrig gehalten werden sollen. Es ist dann möglich, mit einem "kalten" Konverter an eine Betankungsstation heranfahren zu können. Ferner hat eine Gasbetankung der Konverter 27, 28 oder auch des Konverters 2 den Vorteil, daß der oder die Konverter an einem Ort innerhalb eines Kraftfahrzeuges angeordnet werden können, der bei Unfällen sehr sicher ist und der aus diesem Grunde von außen nur schwer zugänglich ist. An eine erreichbare Position sind dann lediglich die freien Enden der Befüllungsleitungen 36, 37 zu führen.

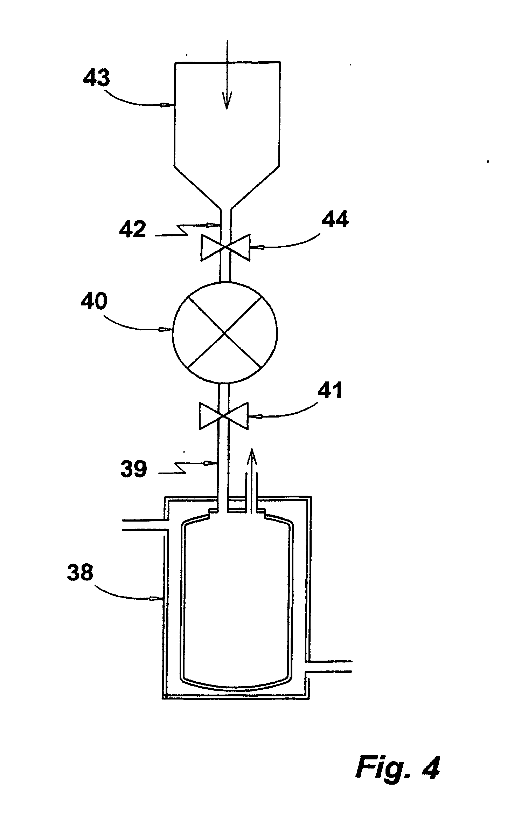

Figur 4 zeigt einen weiteren Konverter 38, der zu seiner Befüllung mit einem Befüllungsstutzen 39 an ein Zellenrad 40 angeschlossen ist. Das Zellenrad 40 ist ausgangsseitig durch ein Magnetventil 41 absperrbar. Eingangsseitig ist das Zellenrad 40 an einen weiteren Befüllungsstutzen 42 angeschlossen, an dessen freiem Ende ein Bevorratungsbehältnis 43 angeordnet ist. Das Zellenrad 40 ist eingangsseitig durch ein weiteres Magnetventil 44 absperrbar. In dem Bevorratungsbehältnis 43 sind nicht näher dargestellte Ammoniumcarbamat-Pellets enthalten. Die Pellets selbst sind zur Verbesserung ihrer Handhabbarkeit beschichtet. Gleichwohl ist diese Beschichtung so ausgestaltet, daß durch den Dampfdruck des Ammoniumcarbamats eine geringfügige Zersetzung bereits in dem Bevorratungsbehältnis 43 einsetzt. Die einzelnen Pellets neigen dann nicht zu einer Verklebung, da sie von der durch die Zersetzung gebildeten Gasgemischhülle umgeben sind, was ebenfalls ihren Transport in das Zellenrad 40 und anschließend in den Konverter 38 unterstützt. Über die Magnetventile 44 und 41 werden die Pellets zunächst dem Zellenrad 40 und anschließend dem Konverter 38 zu seiner Befüllung zugeführt. Dabei kann diese Befüllung kontinuierlich durchgeführt werden, so daß in dem Konverter 38 immer eine bestimmte Ammoniumcarbamatmenge vorhanden ist.

### Zusammenstellung der Bezugszeichen

- 1: Abgasreinigungssystem
- 2: Konverter
- 3: Zuleitungsstrang
- 4: Dieselmotor
- 5: Taktventil
- 6: SCR-Katalysator
- 7: Abgasstrang
- 8: Steuereinheit
- 9: Steuerleitung
- 10: Heizeinheit
- 11: Reaktionsbehälter
- 12: Wärmeschlange
- 13: Kühlwasserzuleitung
- 14: Kühlwasserableitung
- 15: Ammoniumcarbamat
- 16: Druckreduzierventil
- 17: Magnetventil
- 18: Luftleitung
- 19: Luftleitung
- 20: Lufteinspeisungseinrichtung
- 21: Kompressor
- 22: Magnetventil
- 23: Rückschlagventil
- 24: Mischkammer
- 25: Kaltstartspeicher
- 26: Konvertersystem
- 27: Konverter
- 28: Konverter
- 29: Drei-Wege-Ventil
- 30: Kühlwasserzuleitung
- 31: Kühlwasserableitung
- 32: Kühlwasserableitung
- 33: Zuleitungsstrang
- 34: Magnetventil
- 35: Magnetventil
- 36: Befüllungsleitung
- 37: Befüllungsleitung
- 38: Konverter
- 39: Befüllungsstutzen
- 40: Zellenrad
- 41: Magnetventil
- 42: Befüllungsstutzen
- 43: Bevorratungsbehältnis
- 44: Magnetventil

## Patentansprüche

1. Abgasreinigungssystem zum Entsticken von Abgasen von Verbrennungsaggregaten an einem SCR-Katalysator umfassend einen beheizbaren, druckfesten Konverter (2), in dem ein thermolytisch NH₃-abspaltender Stoff (15) oder ein entsprechendes Stoffgemisch enthalten ist, einen NH₃-Speicher zum Zwischenspeichern von aus dem Stoff oder dem Stoffgemisch abgespaltenem NH₃, einen den Konverter (2) mit dem Abgasstrang verbindenden Zuleitungsstrang (3) zum Zuführen des NH₃ in den Abgasstrom und eine in den Zuleitungsstrang (3) integrierten Dosiervorrichtung (5) zum Dosieren der in den Abgasstrom einzuleitenden NH₃-Menge, **dadurch gekennzeichnet, daß** dem Zuleitungsstrang (3) ein Kaltstartspeicher (25) zugeordnet ist, in welchem Kaltstartspeicher (25) beim Starten des Verbrennungsaggregates (4) eine gewisse Menge des NH₃abspaltenden Stoffes (15) oder Stoffgemisches enthalten ist, welcher Kaltstartspelcher (25) über eine Heizeinrichtung verfügt, mit der der Stoff (15) oder das Stoffgemsich in dem Kaltstartspeicher (25) zum Abspalten von NH₃ aufheizbar ist, und welcher Kaltstartspeicher (25) mit seinem offenen Ende in NH₃-Strömungsrichtung vor der Dosiereinrichtung (5) in den Zuleitungsstrang (3) mündet und dergestalt bezüglich des Zuleitungsstranges (3) angeordnet ist, daß in dem Kaltstartspeicher (25) bei einem normalen Betrieb des Systems (1) NH₃ bzw. NH₃-abspaltender Stoff gefangen wird.

2. Abgasreinigungssystem nach Anspruch 1, **dadurch gekennzeichnet, daß** der Kaltstartspeicher (25) mit einem das NH₃ oder das NH₃-abspaltende Stoffgemisch sorbierenden Mittel, etwa Aktivkohle befüllt ist.

3. Abgasreinigungssystem zum Entsticken von Abgasen von Verbrennungsaggregaten an einem SCR-Katalysator umfassend einen beheizbaren, druckfesten Konverter (2), in dem ein thermolytisch NH₃-abspaltender Stoff (15) oder ein entsprechendes Stoffgemisch enthalten ist, einen NH₃-Speicher zum Zwischenspeichern von aus dem Stoff (15) oder dem Stoffgemisch abgespaltenem NH₃, einen den Konverter (2) mit dem Abgasstrang verbindenden Zuleitungsstrang (3) zum Zuführen des NH₃ in den Abgasstrom und eine in den Zuleitungsstrang (3) integrierten Dosiervorrichtung (5) zum Dosieren der in den Abgasstrom einzuleitenden NH₃-Menge, **dadurch gekennzeichnet, daß** dem Zuleitungsstrang (3) eine Lufteinspeisungseinrichtung (20) zugeordnet ist, mit der Luft in den Zuleitungsstrang (3) einblasbar ist.

4. Abgasreinigungssystem nach Anspruch 3, **dadurch gekennzeichnet, daß** die Lufteinspeisungseinrichtung (20) zwei mit Ventilen (22, 23) versehene Luftleitungen (18, 19) umfaßt, von denen eine erste in NH₃-Strömungsrichtung hinter und eine zweite in NH₃-Strömungsrichtung vor der Dosiervorrichtung (5) in den Zuleitungsstrang (3) münden.

5. Abgasreinigungssystem nach Anspruch 4, **dadurch gekennzeichnet, daß** die erste Luftleitung (18) in eine in den Zuleitungsstrang (3) integrierte Mischkammer (24) mündet.

6. Abgasreinigungssystem nach Anspruch 4 oder 5, **dadurch gekennzeichnet, daß** das in der zweiten Luftleitung (19) angeordnete Ventil ein Rückschlagventil (23) ist und dem in NH₃-Strömungsrichtung vor der Mündung der ersten Luftleitung befindlichen Abschnitt des Zuleitungsstranges eine Heizeinrichtung zugeordnet ist.

7. Abgasreinigungssystem zum Entsticken von Abgasen von Verbrennungsaggregaten an einem SCR-Katalysator umfassend einen beheizbaren, druckfesten Konverter, In dem ein thermolytisch NH₃abspaltender Stoff oder ein entsprechendes Stoffgemisch enthalten ist, einen NH₃-Speicher zum Zwischenspeichem von aus dem Stoff oder dem Stoffgemisch abgespaltenem NH₃, einen den Konverter mit dem Abgasstrang verbindenden Zuleitungsstrang zum Zuführen des NH₃ in den Abgasstrom und eine in den Zuleitungsstrang integrierten Dosiervorrichtung zum Dosieren der in den Abgasstrom einzuleitenden NH₃-Menge, **dadurch gekennzeichnet, daß** im wesentlichen dem gesamten Zuleitungsstrang eine Heizeinrichtung zugeordnet ist.

8. Abgasreinigungssystem nach Anspruch 7, **dadurch gekennzeichnet, daß** die in dem Zuleitungsstrang befindlichen Aggregate in einer konstruktiven Einheit vereint sind, welche Einheit sowohl mit einer Widerstandsheizung ausgerüstet ist, als auch Durchlässe aufweist, die an den Kühlwasserkreislauf eines Verbrennungsmotors anschließbar sind.

## Claims

1. Exhaust gas purification system for removing nitric oxides from the exhaust gases of combustion units on a SCR catalyst, including a heatable, pressure-resistant converter (2) which contains a thermolytically NH₃-releasing substance (15) or a corresponding substance mixture, and including a NH₃ storage unit for the intermediate storage of NH₃ released from the substance or the substance mixture, a supply line (3) connecting the converter (2) with the exhaust gas line to supply the NH₃ to the stream of exhaust gas and a metering apparatus (5), which is integrated into the supply line (3), to meter the quantity of NH₃ to be introduced into the stream of exhaust gas, **characterised in that** there is associated with the supply line (3) a cold-start storage unit (25) in which a specific quantity of the NH₃-releasing substance (15) or substance mixture is contained as the combustion unit (4) is started up, which cold-start storage unit (25) has a heating device by means of which the substance (15) or substance mixture in the cold-start storage unit (25) can be heated to release NH₃, and which cold-start storage unit (25) opens out at its open end into the supply line (3) before the metering apparatus (5) in the flow direction of the NH₃, and is disposed relative to the supply line (3) in such a way that NH₃ or NH₃-releasing substance is captured in the cold-start storage unit (25) during normal operation of the system (1).

2. Exhaust gas purification system according to claim 1, **characterised in that** the cold-start storage unit (25) is filled with a material which sorbs the NH₃ or the NH₃-releasing substance mixture, for instance activated carbon.

3. Exhaust gas purification system for removing nitric oxides from the exhaust gases of combustion units on a SCR catalyst, including a heatable, pressure-resistant converter (2) which contains a thermolytically NH₃-releasing substance (15) or a corresponding substance mixture, and including a NH₃ storage unit for the intermediate storage of NH₃ released from the substance or the substance mixture, a supply line (3) connecting the converter (2) with the exhaust gas line to supply the NH₃ to the stream of exhaust gas and a metering apparatus (5), which is integrated into the supply line (3), to meter the quantity of NH₃ to be introduced into the stream of exhaust gas, **characterised in that** there is associated with the supply line (3) a device (20) for feeding air, by means of which device air can be blown into the supply line (3).

4. Exhaust gas purification system according to claim 3, **characterised in that** the device (20) for feeding air comprises two air lines (18, 19) provided with valves (22, 23), a first of these air lines opening into the supply line (3) behind the metering apparatus (5) in the flow direction of the NH₃, and a second opening into the supply line (3) before the metering apparatus (5) in the flow direction of the NH₃.

5. Exhaust gas purification system according to claim 4, **characterised in that** the first air line (18) opens into a mixing chamber (24) integrated into the supply line (3).

6. Exhaust gas purification system according to claim 4 or 5, **characterised in that** the valve arranged in the second air line (19) is a non-return valve (23) and a heating device is associated with the portion of the supply line located before the outlet of the first air line in the flow direction of the NH₃.

7. Exhaust gas purification system for removing nitric oxides from the exhaust gases of combustion units on a SCR catalyst, including a heatable, pressure-resistant converter which contains a thermolytically NH₃-releasing substance or a corresponding substance mixture, and including a NH₃ storage unit for the intermediate storage of NH₃ released from the substance or the substance mixture, a supply line connecting the converter with the exhaust gas line to supply the NH₃ to the stream of exhaust gas and a metering apparatus, which is integrated into the supply line, to meter the quantity of NH₃ to be introduced into the stream of exhaust gas, **characterised in that** a heating device is associated substantially with the entire supply line.

8. Exhaust gas purification system according to claim 7, **characterised in that** the units located in the supply line are combined in one constructional unit, which unit is equipped both with a resistance heating mechanism and with ports which can be connected to the cooling water circuit of a combustion engine.

## Revendications

1. Système de purification de gaz d'échappement pour éliminer l'azote contenu dans des gaz d'échappement de groupes à combustion au moyen d'un catalyseur à réduction sélective comportant un convertisseur (2) chauffant, résistant à la pression, lequel contient une matière dégageant du NH₃ (15) par thermolyse ou un mélange de matières similaires, un réservoir de NH₃ servant au stockage intermédiaire du NH₃ qui s'est dégagé de la matière ou du mélange de matières, une voie d'amenée (3) reliant le convertisseur (2) avec le gaz d'échappement afin d'acheminer le NH₃ vers le flux des gaz d'échappement et un dispositif de dosage (5) intégré dans la voie d'amenée (3) dosant la quantité de NH₃ à introduire dans le flux des gaz d'échappement **caractérisé en ce que** la voie d'amenée (3) comporte un réservoir de démarrage à froid (25), lequel réservoir de démarrage à froid (25) contient lors du démarrage du groupe à combustion (4) une certaine quantité de matière (15) ou de mélange de matières dégageant du NH₃, réservoir de démarrage à froid (25) disposant d'un chauffage permettant le chauffage de la matière (15) ou du mélange de matières en vue de dégager du NH₃, ce réservoir de démarrage à froid (25) débouchant avec son extrémité ouverte dans le sens du flux de NH₃ devant le dispositif doseur (5), dans la voie d'amenée (3) et étant disposé de telle manière vis-à-vis de la voie d'amenée (3), que, lors du fonctionnement normal du système (1) le réservoir de démarrage à froid (25) piège le NH₃ ou la matière dégageant du NH_{3.}

2. Système de purification des gaz d'échappement selon la revendication 1 **caractérisé en ce que** le réservoir de démarrage à froid (25) soit rempli avec un produit absorbant le NH₃ ou le mélange de matières dégageant du NH₃, par exemple du charbon actif.

3. Système de purification des gaz d'échappement pour éliminer l'azote contenu dans les gaz d'échappement de groupes de combustion par le biais d'un catalyseur SCR comportant un convertisseur (2) chauffant, résistant à la pression, lequel contient une matière dégageant du NH₃ (15) par thermolyse ou un mélange de matières similaires, un réservoir de NH₃ servant au stockage intermédiaire du NH₃ qui s'est dégagé de la matière (15) ou du mélange de matières, une voie d'amenée (3) reliant le convertisseur (2) avec le gaz d'échappement afin d'acheminer le NH₃ vers le flux des gaz d'échappement et un dispositif de dosage (5) intégré dans la voie d'amenée (3) dosant la quantité de NH₃ à introduire dans le flux des gaz d'échappement **caractérisé en ce que** la voie d'amenée (3) comprenne un dispositif d'alimentation d'air (20) qui permette l'injection d'air dans la voie d'amenée (3).

4. Système de purification des gaz d'échappement selon la revendication 3 **caractérisé en ce que** le dispositif d'alimentation d'air (20) comprenne deux conduites d'air (18, 19) munies de deux clapets (22, 23), dont la première débouche dans le sens du flux du NH₃ après le dispositif de dosage (5), et la seconde, dans le sens du flux du NH₃ avant le dispositif de dosage (5).

5. Système de purification des gaz d'échappement selon la revendication 4 **caractérisé en ce que** la première conduite d'air (18) débouche dans un sas de mélange (24) intégré dans la voie d'amenée (3).

6. Système de purification des gaz d'échappement selon la revendication 4 ou 5 **caractérisé en ce que** le clapet intégré dans la seconde conduite d'air (19) soit un clapet anti-retour (23) et que le tronçon de la voie d'amenée situé avant la jonction avec la première conduite d'air, dans le sens du flux de NH_{3,} comprenne un dispositif de chauffage.

7. Système de purification de gaz d'échappement pour éliminer l'azote contenu dans des gaz d'échappement de groupes à combustion au moyen d'un catalyseur à réduction sélective comportant un convertisseur chauffant, résistant à la pression, lequel contient une matière dégageant du NH₃ par thermolyse ou un mélange de matières similaires, un réservoir de NH₃ servant au stockage intermédiaire du NH₃ qui s'est dégagé de la matière ou du mélange de matières, une voie d'amenée reliant le convertisseur avec le gaz d'échappement afin d'acheminer le NH₃ vers le flux des gaz d'échappement et un dispositif de dosage intégré dans la voie d'amenée dosant la quantité de NH₃ à introduire dans le flux des gaz d'échappement **caractérisé par le fait qu'**un dispositif de chauffage soit essentiellement affecté à la totalité de la voie d'amenée.

8. Système de purification de gaz d'échappement selon la revendication 7 **caractérisé en ce que** les groupes se trouvant dans la voie d'amenée sont réunis en une seule unité laquelle peut aussi bien être équipée d'un chauffage ohmique que présenter des ouvertures permettant son raccordement au circuit d'eau de refroidissement d'un moteur à combustion.
